# EUROPEAN PATENT SPECIFICATION

(11) **EP 3 819 150 B1**
(45) Date of publication and mention of the grant of the patent: **04.12.2024**
(21) Application number: 20197371.6
(22) Date of filing: 22.09.2020
(51) Int. Cl.: B60K 11/04, F01N 13/18, A01D 101/00

(54) **RIDING LAWN MOWER**
AUFSITZRASENMÄHER
TONDEUSE À GAZON AUTOPORTÉE

(30) Priority: 05.11.2019 JP 2019200816
(43) Date of publication of application: 12.05.2021
(73) Proprietor: Iseki & Co., Ltd., Matsuyama-shi, Ehime 799-2692 (JP)
(72) Inventor: MASUDA, Ryutaro, Iyo-gun,, Ehime 791-2193 (JP); KURITA, Kazuyuki, Iyo-gun,, Ehime 791-2193 (JP)
(74) Representative: TBK

(56) References cited:
- EP-A1- 3 153 342
- US-A- 5 199 521
- US-A1- 2013 256 054
- US-A1- 2016 194 989
- US-A1- 2017 087 976

## Description

### TECHNICAL FIELD

The present invention relates to a riding lawn mower.

### BACKGROUND ART

Conventionally, there is a lawn mower on which a diesel engine, a radiator, an air cleaner, and an exhaust gas purification device are mounted. In such a lawn mower, an engine is arranged behind a driver's seat, an air cleaner is arranged above the engine, a radiator is arranged to protrude above the air cleaner, and an exhaust gas purification device is arranged behind the radiator and the engine (see JP 2016 124427 A).

With this configuration, airflow that passes through the radiator and enters an engine room can push the hot air above the engine to lower the temperature in the engine room, and it is possible to create a cooling air path that blows outs hot air around the exhaust gas purification device that becomes hot.

However, in the above-described conventional configuration, the ground clearance of the engine room is increased. Therefore, in the case of the lawn mower in which a grass collection container for storing the mowed grass is provided above the engine room, the center of gravity becomes high, and the stable running may be difficult.

EP 3 153 342 A1 discloses a lawn mower having a radiator and an air cleaner arranged in front of an engine in an engine room. The lawn mower of this configuration has the features specified in the preamble of claim 1.

### SUMMARY OF INVENTION

The invention has been made in view of the above situations, and an object thereof is to provide a riding lawn mower capable of stably running while including a grass collection container.

In order to solve the above-described problems and achieve the object, a riding lawn mower includes the features described in claim 1.

The riding lawn mower according to claim 1 can stably run even when the grass collection container is provided and the exhaust gas purification device is disposed.

### BRIEF DESCRIPTION OF DRAWINGS

Fig. 1 is a side view of a riding lawn mower according to an embodiment;
Fig. 2 is a schematic view of the riding lawn mower;
Fig. 3 is an explanatory view showing in detail an engine room provided in a running vehicle body of the riding lawn mower;
Fig. 4 is a transmission line diagram of the riding lawn mower;
Fig. 5 is a block diagram centering on a control part of the riding lawn mower;
Fig. 6 is an explanatory view of an exhaust gas purification device provided in the riding lawn mower;
Fig. 7A is an explanatory view of a connector for mounting the exhaust gas purification device;
Fig. 7B is an explanatory view showing a modification of the connector;
Fig. 8 is an explanatory view showing an arrangement of a bonnet covering the engine room and a radiator fan;
Fig. 9 is an explanatory view of the bonnet; and
Fig. 10 is an explanatory view of an engine fan provided on the back side of the bonnet.

### DESCRIPTION OF EMBODIMENTS

Hereinafter, an embodiment of a riding lawn mower disclosed in the present application will be described in detail with reference to the accompanying drawings. The invention is not limited to the embodiments described below.

### <Overall configuration of riding lawn mower 1>

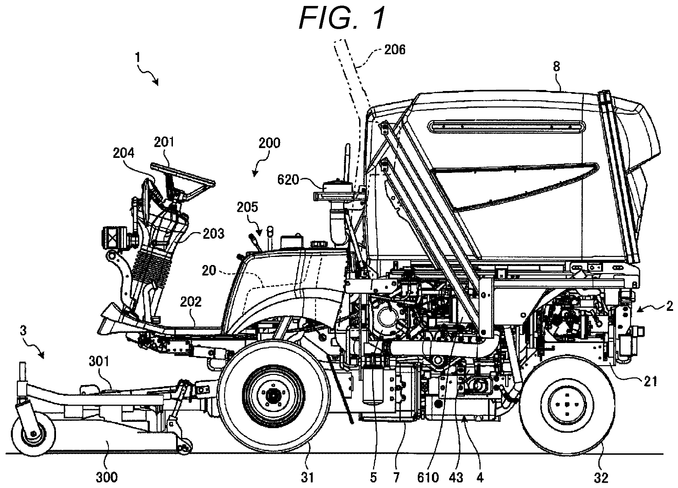

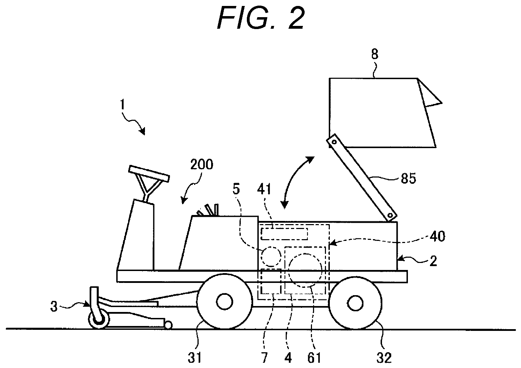

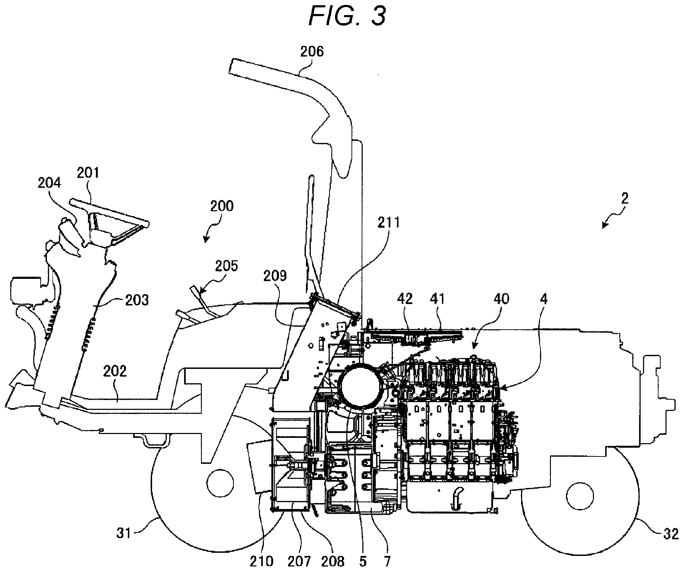

First, an overall configuration of a riding lawn mower 1 will be briefly described with reference to Figs. 1 to 3. Fig. 1 is a side view of the riding lawn mower 1 according to an embodiment, Fig. 2 is a schematic view of the riding lawn mower 1, and Fig. 3 is an explanatory view showing in detail an engine room 40 provided in a running vehicle body 2 of the riding lawn mower 1. In Fig. 3, the inside of the engine room 40 is shown in a sectional view.

The riding lawn mower 1 is operated by an operator (also referred to as a worker) who is seated on a driver's seat 20 provided in a front portion of the running vehicle body 2 having a vehicle body frame 21. In the following, a front and rear direction refers to a running direction when the riding lawn mower 1 goes straight. The front side in the running direction is defined as "the front," and the rear side is defined as "the rear." The running direction of the riding lawn mower 1 refers to a direction from the driver's seat 20 toward a steering wheel 201 when the riding lawn mower 1 goes straight.

Further, a left and right direction refers to a direction that is horizontally orthogonal to the front and rear direction. In the following description, the left and right are defined toward "the front" side. That is, the left hand side refers to "the left" and the right hand side refers to "the right" with an operator seated on the driver's seat 20 and facing forward. Further, an upper and lower direction refers to a vertical direction. The front and rear direction, the left and right direction, and the upper and lower direction are three-dimensionally orthogonal to each other. The respective directions are defined for the sake of easy understanding of the description, and the invention is not limited to these directions. In the following, the riding lawn mower 1 may be referred to as a machine body.

As shown in Figs. 1 to 3, the riding lawn mower 1 includes, as a pair of left and right running wheels, a pair of left and right front wheels 31 at the front portion of the running vehicle body 2 and a pair of left and right rear wheels 32 at the rear portion of the running vehicle body 2.

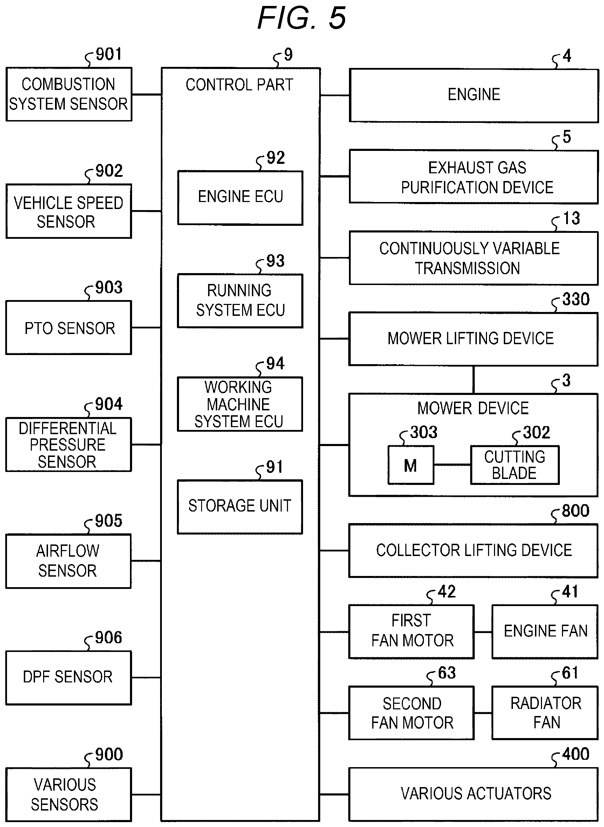

Further, the riding lawn mower 1 includes a mower device 3 in front of the lower portion of the running vehicle body 2 (see Fig. 5). The mower device 3 has a cutting blade 302 that rotates around a vertical axis (an axis extending in the upper and lower direction in Fig. 1), and a motor 303 that drives the cutting blade 302. The mower device 3 is vertically movably attached to the front of the running vehicle body 2 via a mower lifting device 330 (see Fig. 5).

Further, the riding lawn mower 1 includes a control part 200 at the front portion of the running vehicle body 2. The control part 200 includes the driver's seat 20, a floor step 202, a steering column 203, and the steering wheel 201. The floor step 202 is provided in front of the driver's seat 20. The steering column 203 is erected on the front portion of the floor step 202. The steering wheel 201 is provided above the steering column 203. In addition to the steering wheel 201, an operation panel 204, various operation levers 205, various operation switches, and the like are provided above the steering column 203. Further, a safety bar 206 is provided at the rear portion of the control part 200 so that it can be tilted back and forth.

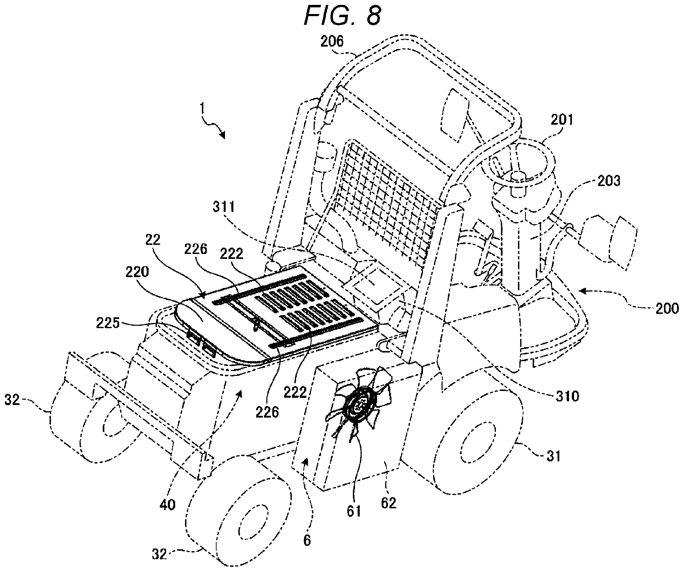

Further, a collector 8 is provided behind the driver's seat 20 on the running vehicle body 2. That is, the collector 8 that is a grass collection container for storing grass or the like (hereinafter, referred to as grass) cut by the mower device 3 is vertically movably mounted above a bonnet 22 (see Figs. 8 to 10) covering the engine room 40 via a lifting arm 85, as shown in Fig. 2. The lifting arm 85 constitutes a collector lifting device 800 (see Fig. 5) together with a lifting cylinder and the like (not shown).

### <Engine room 40>

Further, as shown in Figs. 2 and 3, on the rear side of the driver's seat 20 (see Fig. 1) in the riding lawn mower 1, the engine room 40 is formed below the collector 8, and an engine 4 is mounted in the engine room 40. Further, the riding lawn mower 1 includes the bonnet 22 that is provided at an upper portion of the engine room 40 and covers the engine 4. As shown, an engine fan 41 is attached to the bonnet 22. The bonnet 22 will be described in detail later. Further, a radiator 6 is arranged on the side of the engine 4 and on the back side of the plane of Fig. 3 (see Fig. 8).

The engine 4 and an exhaust gas purification device 5 for purifying exhaust gas from the engine 4 are arranged in parallel inside the engine room 40. The exhaust gas purification device 5 is provided in the middle of an exhaust pipe 43 (see Fig. 1) that guides the exhaust gas from the engine 4 to the outside of the machine body.

The engine 4 in the present embodiment is a diesel engine with a supercharger (turbocharger). However, the engine 4 may not have a supercharger.

The exhaust gas purification device 5 has a well-known structure. The exhaust gas purification device 5 has a filter called a DPF (Diesel Particulate Filter) housed therein, and collects particles by allowing the exhaust gas to pass through the DPF. Further, since the DPF may be clogged due to the accumulation of the collected particles, the exhaust gas purification device 5 has a regeneration function of burning out the accumulated particles.

Further, the riding lawn mower 1 includes an air cleaner 610 for supplying clean air to the engine 4. The air cleaner 610 is connected to a pre-cleaner 620 arranged on the upper left side of the driver's seat 20. The pre-cleaner 620 is fixed to a machine body frame.

Further, the air cleaner 610 in the present embodiment is provided near the outside of the machine body, as shown in Fig. 1. Therefore, the degree of freedom in arrangement is higher than when the air cleaner 610 is provided inside the machine body.

Further, the riding lawn mower 1 includes a transmission case 7 to which power from the engine 4 is transmitted. The transmission case 7 is arranged below the engine 4 on the side of the driver's seat 20. In the riding lawn mower 1 according to the present embodiment, the exhaust gas purification device 5 is arranged above the transmission case 7. With this configuration, the exhaust gas purification device 5 can be arranged at a position as low as possible without causing a dead space in the engine room 40.

In this way, although the riding lawn mower 1 according to the present embodiment includes the collector 8, and accordingly, has a higher center of gravity, the exhaust gas purification device 5 can be arranged at a lower position. Therefore, the riding lawn mower 1 enables stable running by lowering the position of the center of gravity as a whole.

Further, as shown in Fig. 3, the riding lawn mower 1 includes a blower case 208 having a blower 207 installed therein. The blower case 208 and the collector 8 are connected by a duct 209. Further, a shooter 210 is provided between the blower 207 and the mower device 3.

Thus, in the riding lawn mower 1, the grass cut by the mower device 3 is sent from a mower deck 300 shown in Fig. 1 to the blower 207 via the shooter 210, and is further pneumatically conveyed to the collector 8 via the duct 209.

As shown in Fig. 3, a grass outlet 211 is formed at the end of the duct 209. The grass outlet 211 serves as a connecting portion with the collector 8. That is, when the collector 8 is in a lowered normal position, the grass outlet 211 overlaps an inlet (not shown) of the collector 8, and the duct 209 and the collector 8 are connected. The grass cut by the mower device 3 is sent into the collector 8 via the shooter 210 and the duct 209 by the blower 207.

### <Transmission configuration of riding lawn mower 1>

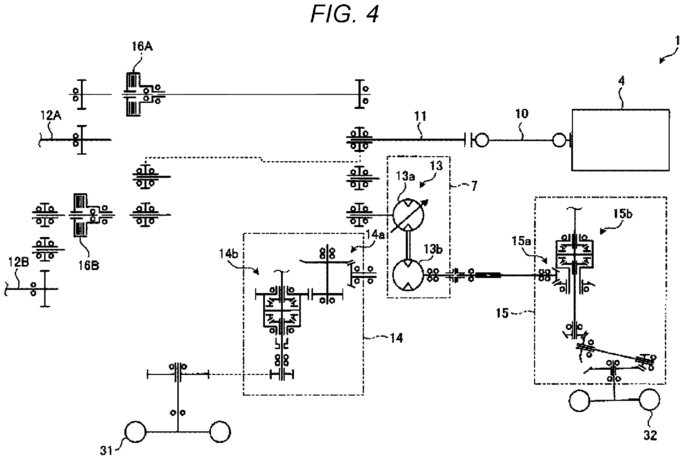

Next, a transmission configuration of the riding lawn mower 1 will be briefly described with reference to Fig. 4. Fig. 4 is a transmission line diagram of the riding lawn mower 1 according to the embodiment. As shown in Fig. 4, in the riding lawn mower 1, the power (rotational power) output from the engine 4 is transmitted to a distribution transmission shaft 11 connected to an output shaft 10 of the engine 4, and is transmitted to a first PTO (Power Take-off) shaft (also referred to as a blower PTO shaft) 12A. The rotational power output from the blower PTO shaft 12A is transmitted to the above-described blower 207 via a blower transmission device (gear transmission device or the like), for example. In Fig. 4, reference numerals 16A, 16B indicate PTO clutches.

Further, the rotational power output from the distribution transmission shaft 11 is transmitted to driving wheels via a running transmission. That is, through a hydraulic pump 13a of a hydraulic continuously variable transmission (hereinafter, also referred to as HST (Hydro Static Transmission)) 13 accommodated in the transmission case 7, a trunnion shaft tilts to shift a hydraulic motor 13b.

By the way, the riding lawn mower 1 is configured to be switchable between two-wheel drive (2WD) and four-wheel drive (4WD). Therefore, when the riding lawn mower 1 is driven in 2WD, one (e.g., the left and right front wheels 31) of the left and right front wheels 31 and the left and right rear wheels 32 becomes driving wheels. When the riding lawn mower 1 is driven in 4WD, the left and right front wheels 31 and the left and right rear wheels 32 become driving wheels.

In case of 4WD, the rotational power output from the distribution transmission shaft 11 is transmitted to the front wheels 31 via the hydraulic pump 13a and the hydraulic motor 13b of the HST 13 and via a gear transmission 14a and a differential gear mechanism 14b in a differential gear case 14. Further, the rotational power output from the distribution transmission shaft 11 is transmitted to the rear wheels 32 via the hydraulic pump 13a and the hydraulic motor 13b of the HST 13 and via a gear transmission 15a and a differential gear mechanism 15b in a differential gear case 15.

Further, the rotational power output from the distribution transmission shaft 11 is transmitted to a second PTO shaft (also referred to as a mower PTO shaft) 12B. The rotational power output from the mower PTO shaft 12B is transmitted to the above-described cutting blade via a mower input shaft 301 shown in Fig. 1 and a mower transmission (not shown) in the mower deck 300.

### <Control system of riding lawn mower 1>

Here, a control system of the riding lawn mower 1 centering on a control part 9 will be described with reference to Fig. 5. Fig. 5 is a block diagram centering on the control part 9 of the riding lawn mower 1.

The control part 9 can control each unit including various actuators 400 provided in the riding lawn mower 1 by electronic control, and includes a processing unit having a CPU (Central Processing Unit) and the like.

Further, the control part 9 includes a storage unit 91 that stores a program for controlling the drive of a first fan motor 42 that drives the engine fan 41 and a second fan motor 63 that drives a radiator fan 61 and data necessary for driving the various actuators 400 and the like. The storage unit 91 includes a hard disk, a ROM (Read Only Memory), a RAM (Random Access Memory), and the like.

Further, the control part 9 includes an engine ECU (Electronic Control Unit) 92, a running system ECU 93, and a working machine system ECU 94.

The engine ECU 92 controls the output or the like of the engine 4, and the running system ECU 93 controls the continuously variable transmission 13 or the like, thereby controlling the overall running of the machine body. The working machine system ECU 94 controls the overall driving of the mower device 3. The working machine system ECU 94 controls a solenoid valve or the like for turning on and off the PTO clutches 16A, 16B (see Fig. 4) and also controls the mower lifting device 330 to control the lifting and lowering of the mower device 3.

Further, the control part 9 is connected with a combustion system sensor 901, a vehicle speed sensor 902, a PTO sensor 903, a differential pressure sensor 904, an airflow sensor 905, a DPF sensor 906, and other various sensors 900.

The combustion system sensor 901 detects the combustion state of the engine 4. The vehicle speed sensor 902 is provided to calculate the running speed (vehicle speed) of the machine body, and derives a measured value of the vehicle speed from the rotational speeds of the front wheels and the rear wheels. The PTO sensor 903 detects the rotation of the blower PTO shaft 12A and the mower PTO shaft 12B (see Fig. 4).

The differential pressure sensor 904 is provided to detect the exhaust pressure before and after the exhaust gas purification device 5 connected in the middle of the exhaust pipe 43 (see Fig. 1). The airflow sensor 905 is a sensor for detecting the amount of air supplied to the engine 4 and is provided in the air cleaner 610. The DPF sensor 906 detects the degree of clogging of the DPF accommodated in the exhaust gas purification device 5.

In this manner, the control part 9 acquires various data in each unit, and controls the operation of each unit of the machine body based on the data and the result calculated from the data and the like.

### <Mounting structure of exhaust gas purification device 5>

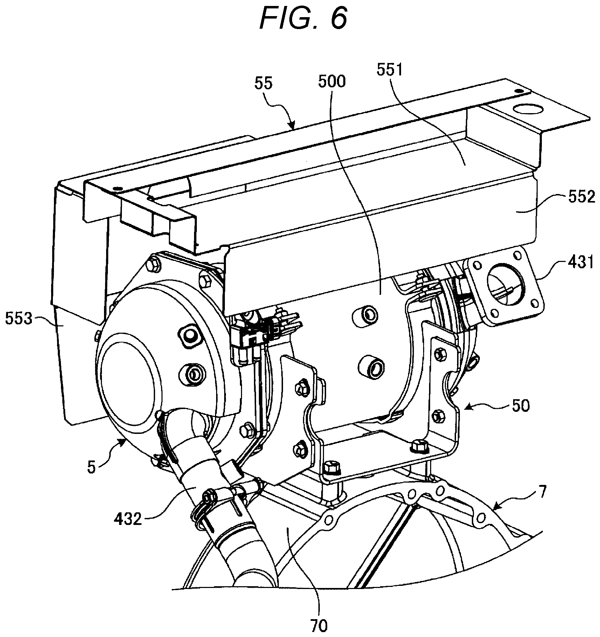

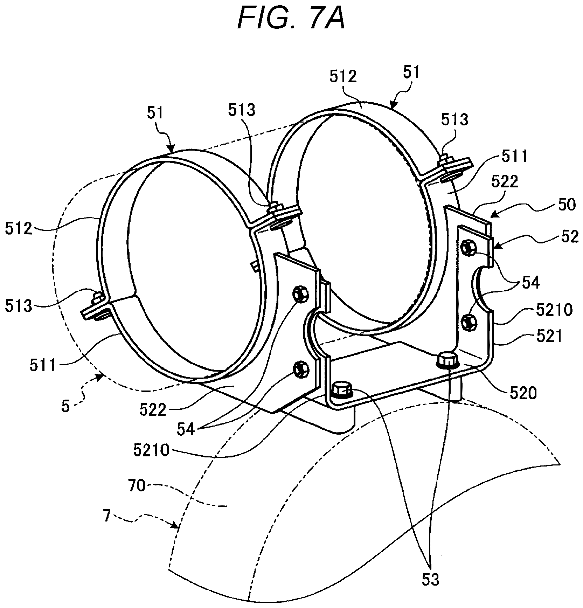

Next, a mounting structure of the exhaust gas purification device 5 will be specifically described with reference to Figs. 3 and 6 to 7A. Fig. 6 is an explanatory view of the exhaust gas purification device 5 provided in the riding lawn mower 1, and Fig. 7A is an explanatory view of a connector 50 for mounting the exhaust gas purification device 5.

As shown in Fig. 6, the exhaust gas purification device 5 has a cylindrical body portion 500 that is a body portion of the exhaust gas purification device. An upstream side exhaust pipe 431 of the exhaust pipe 43 is connected to one end of the body portion 500, and a downstream side exhaust pipe 432 of the exhaust pipe 43 is connected to the other end.

By the way, in the present embodiment, a leading end of the exhaust pipe 43 (the downstream side exhaust pipe 432) has an exhaust port opening toward the left side of the machine body. However, it is preferable to provide a diffuser at the exhaust port. With this configuration, there is no danger of ignition of abandoned grass due to hot exhaust gas.

When the mower device 3 is configured to discharge the mowed grass laterally and there is no danger of ignition of the abandoned grass left behind, the leading end of the exhaust pipe 43 (the downstream side exhaust pipe 432) may be opened to the rear of the machine body. In that case, the degree of freedom in designing the shape of the exhaust pipe 43 is increased, and the piping can be installed in parallel so that water is not collected.

Further, as shown in Fig. 3, the exhaust gas purification device 5 is arranged at a height that does not protrude upward from the upper end of the engine 4. At that time, the exhaust gas purification device 5 is connected to an upper portion of the transmission case 7 via the predetermined connector 50.

As shown in Fig. 7A, the connector 50 includes a pair of ring-shaped holder portions 51, 51 for holding the body portion 500 of the exhaust gas purification device 5, and a stay portion 52 to which the holder portions 51, 51 are attached and in which a connecting portion 520 with the transmission case 7 is formed.

Further, the stay portion 52 has a first stay member 521 connected to the transmission case 7, and a pair of second stay members 522, 522 connected to the holder portion 51, respectively.

The first stay member 521 is formed in a substantially U-shape that has a flat plate-shaped bottom plate portion serving as the connecting portion 520 and upright pieces 5210, 5210 rising from both ends of the bottom plate portion. Further, the first stay member 521 can be connected to an upper portion of a flange portion 70 of the transmission case 7 at the connecting portion 520 by bolts 53, 53.

The pair of left and right second stay members 522 are connected to the first stay member 521 by connecting screws 54, respectively. The holder portion 51 is welded to one side edge of the second stay member 522 formed in an arc shape.

The holder portion 51 includes a semi-circular first holder 511 and a semi-circular second holder 512 abutted against and connected to the first holder 511 by screws 513, 513. The first holder 511 is welded to the second stay member 522.

With this configuration, the first holder 511 and the second holder 512 can firmly hold the substantially cylindrical body portion 500 of the exhaust gas purification device 5. Further, when the screws 513 are loosened, the body portion 500 can be rotated in a circumferential direction and its mounting angle can be adjusted. In this way, the positioning of the body portion 500 is also easy, and thus, work such as piping connection is also easy.

Further, the stay portion 52 is divided into the first stay member 521 connected with the transmission case 7 and the second stay members 522 connected with the holder portions 51, respectively. Therefore, when the first stay member 521 is connected to the transmission case 7 in advance, it is easy to install the exhaust gas purification device 5 later and it is also easy to dismount it after the installation, so that maintenance is improved.

In this way, although the riding lawn mower 1 in the present embodiment includes the collector 8, and accordingly, has a higher center of gravity, the exhaust gas purification device 5 can be located as low as possible in the engine room 40 where the devices are generally densely installed. Therefore, it is possible to prevent the center of gravity from becoming higher even when the exhaust gas purification device 5 is provided, so that the driving stability can be secured.

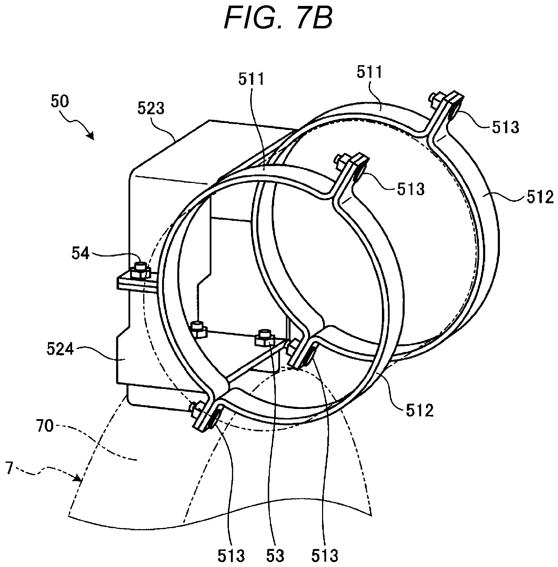

By the way, the connector 50 may have a configuration described below. Fig. 7B is an explanatory view showing a modification of the connector 50. That is, as shown in Fig. 7B, the connector 50 according to the modification includes an upper stay member 523 and a lower stay member 524 that are vertically separable. The semi-circular first holder 511 is welded to the upper stay member 523. The configuration of the holder portion 51 is similar to that shown in Fig. 7B. The holder portion 51 includes the semi-circular first holder 511 and the semi-circular second holder 512 abutted against and connected to the first holder 511 by the screws 513, 513.

The connecting screws 54 can be similarly used to connect the upper stay member 523 and the lower stay member 524. At this time, the connecting screws 54 are welded to the lower stay member 524 to form weld buttons. The connecting screws 54 can be passed through connecting holes formed in the upper stay member 523 and can be tightened with nuts or the like. In this way, it is easy to assemble the upper stay member 523 and the lower stay member 524.

The connector 50 is configured such that the stay portion is separable like the first stay member 521 and the second stay member 522, or the upper stay member 523 and the lower stay member 524. Therefore, for example, when the first stay member 521 or the lower stay member 524 is fixed to the transmission case 7 in advance, the second stay member 522 or the upper stay member 523, to which the holder portions 51 that hold the exhaust gas purification device 5 are connected, can be easily attached to the transmission case 7.

Further, as shown in Fig. 6, the riding lawn mower 1 according to the present embodiment includes a device cover 55 that covers the exhaust gas purification device 5. That is, as shown in Fig. 3, the engine fan 41, which will be described in detail later, is provided above the exhaust gas purification device 5, and the DPF accommodated in the exhaust gas purification device 5 needs to burn the deposited particles, as described above. At that time, the device cover 55 is provided to maintain the DPF in a high temperature state, so that the DPF can be protected from the wind of the engine fan 41.

As shown in Fig. 6, the device cover 55 has a flat surface portion 551 and a hanging portion 552 formed by bending a long side portion of the flat surface portion 551 downward. The device cover 55 is shaped to enclose the exhaust gas purification device 5. Therefore, for example, the device cover 55 prevents grass and the like from falling from above to the exhaust gas purification device 5, thereby preventing the occurrence of a fire or the like in advance. Further, for example, harnesses, hydraulic hoses, and the like are arranged above the flat surface portion 551 and protected from the heat of the DPF when the DPF becomes hot.

Further, the hanging portion 552 serves as a baffle plate that guides the wind from the engine fan 41 to the engine 4 while keeping the wind away from the exhaust gas purification device 5. Although the hanging portion 552 in the present embodiment is bent in a substantially vertical direction, the bending angle of the hanging portion 552 can be set to an appropriate angle.

Further, the device cover 55 is provided with a shielding plate portion 553 on the side opposite to the hanging portion 552 so that hot wind does not flow to the driver's seat 20. The shielding plate portion 553 can prevent a driver sitting on the driver's seat 20 from being exposed to hot wind, thereby preventing discomfort to the driver.

### <Engine fan 41 and radiator fan 61>

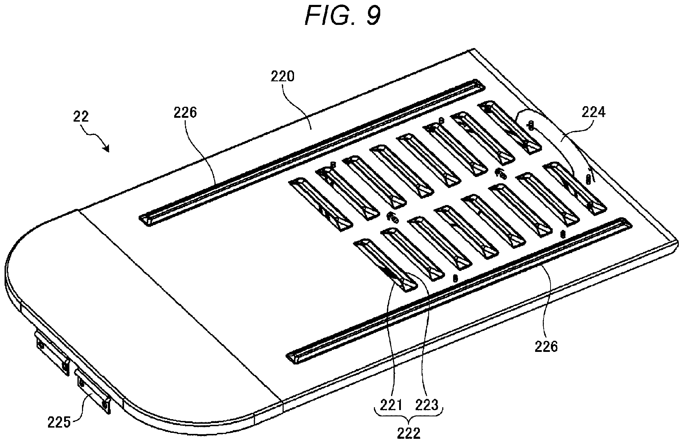

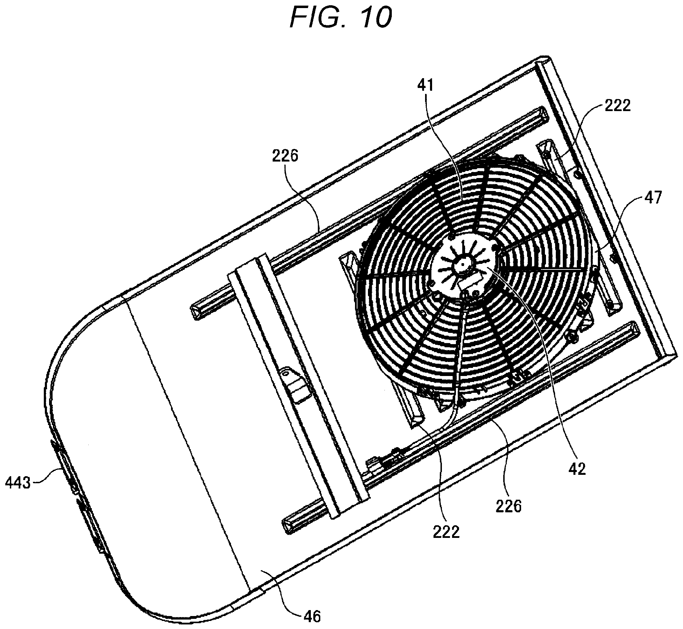

Next, the engine fan 41 and the radiator fan 61 will be described with reference to Figs. 8 to 10. Fig. 8 is an explanatory view showing an arrangement of the bonnet 22 covering the engine room 40 and the radiator fan 61, Fig. 9 is an explanatory view of the bonnet 22, and Fig. 10 is an explanatory view of the engine fan 41 provided on the back side of the bonnet 22.

First, the radiator 6 and the radiator fan 61 will be described. As shown in Fig. 8, the radiator 6 is provided on the right side of the machine body (on the right side of the engine 4). Further, the radiator fan 61 is provided on the inner side of a radiator net 62 that is provided on the outer side of the radiator 6 to prevent entrance of dust. That is, the radiator fan 61 for blowing air to the radiator 6 is arranged adjacent to the side of the radiator 6.

Although not shown, a pipe of a fuel cooler is arranged along an outer surface of the radiator 6 so that it can be cooled by the radiator fan 61. The pipe of the fuel cooler includes a supply pipe and a return pipe, both of which are vertically arranged along the outer surface of the radiator 6.

Further, the bonnet 22 is provided above the engine room 40 so that it can be opened and closed up and down via a hinge portion 225. That is, the bonnet 22 has a substantially rectangular shape and includes a plate-like body 220 having a surface facing the engine 4. An air intake portion 222 having a plurality of vent holes 221 and a cover portion 223 covering the upper portion of each vent hole 221 is formed in the plate-like body 220. A plurality of the air intake portions 222 are provided in two rows between a pair of slits 226, 226 provided in parallel along a longitudinal direction of the plate-like body 220. Further, a handle 224 is formed on the front side of the surface of the plate-like body 220, and the hinge portion 225 is provided at the rear end of the plate-like body 220.

The vent hole 221 is formed in an elongated rectangular shape facing the engine 4, and the cover portion 223 is formed in a shape rising diagonally rearward from a long side portion on the front side of the vent hole 221.

Further, as shown in Fig. 10, the engine fan 41 is attached to the back side of the plate-like body 220. That is, the engine fan 41 for blowing air to the engine 4 is arranged above the engine 4. The same fan can be used for the engine fan 41 and the radiator fan 61, so that the parts management can be rationally done and cost reduction can be achieved.

The engine fan 41 is connected to the first fan motor 42. The engine fan 41 and the first fan motor 42 are connected together to a guard body 47 for protecting the engine fan 41. The guard body 47 is connected to a cut-and-raised piece cut and raised to form the slit 226.

In this manner, the engine fan 41 is provided on the back side of the bonnet 22 where the air intake portions 222 are formed, and, as shown in Fig. 3, the engine fan 41 and the engine 4 are arranged to face each other. Therefore, the outside air can be efficiently drawn into the engine room 40, and the engine 4 can be efficiently cooled.

The collector 8 for storing grass is arranged above the bonnet 22. However, since the air intake portion 222 is provided with the cover portion 223 covering the vent hole 221, it is possible to prevent grass or the like from entering the engine room 40 as much as possible.

Moreover, as described above, the grass outlet 211, which is a connecting portion between the collector 8 and the duct 209, is provided in front of the vent hole 221, and the cover portion 223 is formed in a shape rising diagonally rearward from the front side of the vent hole 221. Therefore, it is possible to more efficiently prevent grass or the like from entering the engine room 40.

### <Control of engine fan 41 and radiator fan 61>

As described above, the riding lawn mower 1 according to the present embodiment includes the engine fan 41 and the radiator fan 61. The engine fan 41 and the radiator fan 61 are configured such that one of both rotates in a suction direction and the other rotates in a blowing direction.

In the present embodiment, the radiator fan 61 rotates in the suction direction and the engine fan 41 rotates in the blowing direction. Therefore, the engine 4 and the radiator 6 in the engine room 40 can be efficiently cooled. That is, since the flow without heated air staying can be generated between the side and the upper side of the engine 4, the engine 4 can be sufficiently cooled.

Further, as shown in Fig. 5, the engine fan 41 and the radiator fan 61 are drive-controlled by the control part 9 and can be reversed in the forward and reverse directions according to predetermined conditions. For example, when the exhaust gas purification device 5 performs the combustion function (post-treatment regeneration) of the DPF, the control part 9 can rotate the radiator fan 61 in the blowing direction and rotate the engine fan 41 in the suction direction.

By controlling in this way, during the post-treatment regeneration of the DPF, the dust accumulated on the radiator net 62 can be blown out and removed by reversing the flow of air. Further, when the forward and reverse directions are switched in conjunction with the post-treatment regeneration of the DPF, the wind for blowing out dust becomes easier to pass through the radiator net 62, and dust can be efficiently removed.

Further, even when the engine fan 41 rotates in the suction direction, the control part 9 can rotate the engine fan 41 in the blowing direction when the collector 8 is raised. With this control, it is possible to prevent the grass that has fallen from the collector 8 from entering the engine room 40.

In this way, in the riding lawn mower 1 according to the present embodiment, it is possible to appropriately cool the engine 4 according to its driving state and the like.

Although the riding lawn mower 1 according to the present embodiment has the above-described configuration, for example, an inclined portion may be provided in a return portion from a breather (not shown) of the engine 4 so that oil return or the like does not occur in the airflow sensor 905 provided in an intake path (not shown) from the pre-cleaner 620 to the engine 4.

Further, in the present embodiment, the engine 4 has a supercharger, so that there is no problem even when the intake path to the engine 4 becomes long, and the degree of freedom in designing the air supply path is increased. However, when the engine has no supercharger, it is preferable that the air supply path is as short as possible. In that case, the pre-cleaner 620 may be arranged near the air cleaner 610 to shorten the air supply path.

Further, it is preferable that a hose of the return portion from the breather is made of oil-resistant AEM (ethylene/acrylic/rubber) in order to increase resistance to oil vapor.

Various changes can be made without departing from the scope defined by the appended claims.

### REFERENCE SIGNS LIST

1 Riding lawn mower
2 Running vehicle body
3 Mower device
4 Engine
5 Exhaust gas purification device
6 Radiator
7 Transmission case
8 Collector (Grass collection container)
9 Control part
20 Driver's seat
22 Bonnet
31 Front wheel (running wheel)
32 Rear wheel (running wheel)
40 Engine room
41 Engine fan
50 Connector
51 Holder portion
52 Stay portion
61 Radiator fan
209 Duct
211 Grass outlet (Connecting portion)
221 Vent hole
223 Cover portion
500 Body portion (body of exhaust gas purification device)
520 Connecting portion
521 First stay member
522 Second stay member

## Claims

1. A riding lawn mower (1) comprising:
a running vehicle body (2) comprising running wheels (31, 32) and a driver's seat (20);
a mower device (3) connected to the running vehicle body (2); and
a grass collection container (8) provided behind the driver's seat (20) on the running vehicle body (2) and configured to store grass cut by the mower device (3),
wherein an engine room (40) is provided below the grass collection container (8), and
wherein an engine (4) is arranged in the engine room (40),
**characterized by**
an exhaust gas purification device (5) configured to purify exhaust gas from the engine (4);
a transmission case (7) to which power from the engine (4) is transmitted; and
a connector (50) for mounting the exhaust gas purification device (5) on the transmission case (7),
wherein the transmission case (7) is arranged below the engine (4) on the side of the driver's seat (20),
wherein the exhaust gas purification device (5) is arranged in the engine room (40) above the transmission case (7), and
wherein the connector (50) has
a holder portion (51) configured to hold a body (500) of the exhaust gas purification device (5), and
a stay portion (52) to which the holder portion (51) is attached and in which a connecting portion (520) with the transmission case (7) is formed.

2. The riding lawn mower (1) according to claim 1,
wherein the engine (4) and the exhaust gas purification device (5) are arranged in parallel in the engine room (40).

3. The riding lawn mower (1) according to claim 2,
wherein the exhaust gas purification device (5) is arranged at a height that does not protrude upward from an upper end of the engine (4).

4. The riding lawn mower (1) according to any one of claims 1 to 3, wherein the holder portion (51) is ring-shaped.

5. The riding lawn mower (1) according to claim 4, wherein the stay portion (52) has a first stay member (521; 524) connected to the transmission case (7), and a second stay member (522; 523) connected to the holder portion (51).

## Patentansprüche

1. Aufsitzrasenmäher (1), der Folgendes umfasst:
einen fahrenden Fahrzeugkörper (2), der Laufräder (31, 32) und einen Fahrersitz (20) umfasst;
eine Mähvorrichtung (3), die mit dem fahrenden Fahrzeugkörper (2) verbunden ist; und
einen Grassammelbehälter (8), der hinter dem Fahrersitz (20) auf dem fahrenden Fahrzeugkörper (2) vorgesehen ist und der so konfiguriert ist, dass er von der Mähvorrichtung (3) geschnittenes Gras speichert,
wobei unterhalb des Grassammelbehälters (8) ein Motorraum (40) vorgesehen ist und
wobei in dem Motorraum (40) ein Motor (4) angeordnet ist,
**gekennzeichnet durch**
eine Abgasreinigungsvorrichtung (5), die so konfiguriert ist, dass sie Abgas aus dem Motor (4) reinigt;
ein Getriebegehäuse (7), zu dem Kraft von dem Motor (4) übertragen wird; und
einen Verbinder (50) zur Montage der Abgasreinigungsvorrichtung (5) auf dem Getriebegehäuse (7),
wobei das Getriebegehäuse (7) unterhalb des Motors (4) auf der Seite des Fahrersitzes (20) angeordnet ist,
wobei die Abgasreinigungsvorrichtung (5) oberhalb des Getriebegehäuses (7) in dem Motorraum (40) angeordnet ist und
wobei der Verbinder (50) Folgendes aufweist:
einen Halterungsabschnitt (51), der so konfiguriert ist, dass er einen Körper (500) der Abgasreinigungsvorrichtung (5) hält, und
einen Stegabschnitt (52), an dem der Halterungsabschnitt (51) angebracht ist und in dem ein Verbindungsabschnitt (520) mit dem Getriebegehäuse (7) ausgebildet ist.

2. Aufsitzrasenmäher (1) nach Anspruch 1,
wobei der Motor (4) und die Abgasreinigungsvorrichtung (5) im Motorraum (40) parallel angeordnet sind.

3. Aufsitzrasenmäher (1) nach Anspruch 2,
wobei die Abgasreinigungsvorrichtung (5) in einer Höhe angeordnet ist, die von einem oberen Ende des Motors (4) nicht nach oben ragt.

4. Aufsitzrasenmäher (1) nach einem der Ansprüche 1 bis 3, wobei der Halterungsabschnitt (51) ringförmig ist.

5. Aufsitzrasenmäher (1) nach Anspruch 4, wobei der Stegabschnitt (52) ein erstes Stegelement (521; 524), das mit dem Getriebegehäuse (7) verbunden ist, und ein zweites Stegelement (522; 523) hat, das mit dem Halterungsabschnitt (51) verbunden ist.

## Revendications

1. Tondeuse à gazon autoportée (1) comprenant :
un corps de véhicule de roulement (2) comprenant des roues de roulement (31, 32) et un siège de conducteur (20) ;
un dispositif de tondeuse (3) relié au corps du véhicule (2) ; et
un conteneur de ramassage de l'herbe (8) placé derrière le siège du conducteur (20) sur le corps du véhicule roulant (2) et configuré pour stocker l'herbe coupée par le dispositif de tondeuse (3),
dans laquelle un espace des machines (40) est fourni sous le conteneur de ramassage de l'herbe (8), et
dans laquelle un moteur (4) est disposé dans l'espace des machines (40),
**caractérisé par**
un dispositif de purification des gaz d'échappement (5) configuré pour purifier les gaz d'échappement du moteur (4) ;
un boîtier de transmission (7) auquel la puissance du moteur (4) est transmise ; et
un connecteur (50) pour monter le dispositif de purification des gaz d'échappement (5) sur le boîtier de transmission (7),
dans laquelle le boîtier de transmission (7) est disposé sous le moteur (4) du côté du siège du conducteur (20),
dans laquelle le dispositif de purification des gaz d'échappement (5) est disposé dans l'espace des machines (40) au-dessus du boîtier de transmission (7), et
dans laquelle le connecteur (50) possède
une partie de support (51) configurée pour tenir un corps (500) du dispositif de purification des gaz d'échappement (5), et
une partie de séjour (52) à laquelle la partie de support (51) est fixée et dans laquelle est formée une partie de connexion (520) avec le boîtier de transmission (7).

2. Tondeuse à gazon autoportée (1) selon la revendication 1,
dans laquelle le moteur (4) et le dispositif de purification des gaz d'échappement (5) sont disposés en parallèle dans l'espace des machines (40).

3. Tondeuse à gazon autoportée (1) selon la revendication 2,
dans laquelle le dispositif de purification des gaz d'échappement (5) est disposé à une hauteur qui ne dépasse pas vers le haut d'une extrémité supérieure du moteur (4).

4. Tondeuse à gazon autoportée (1) selon l'une des revendications 1 à 3, dans laquelle la partie de support (51) est en forme d'anneau.

5. Tondeuse à gazon autoportée (1) selon la revendication 4, dans laquelle la partie de séjour (52) a un premier élément de support (521 ; 524) relié au boîtier de transmission (7), et un deuxième élément de support (522 ; 523) relié à la partie de support (51).
